(19) Europäisches Patentamt
European Patent Office
Office européen des brevets

(11) **EP 4 130 071 A1**

(12) **EUROPEAN PATENT APPLICATION**
published in accordance with Art. 153(4) EPC

(43) Date of publication:
**08.02.2023 Bulletin 2023/06**

(21) Application number: **21779723.2**

(22) Date of filing: **23.03.2021**

(51) International Patent Classification (IPC):
***C08F 283/06*** *(1974.07)* ***C09J 4/02*** *(1990.01)*
***C08F 216/14*** *(1974.07)* ***C08F 220/18*** *(1974.07)*
***C09J 133/04*** *(1990.01)* ***C08F 2/24*** *(1974.07)*
***C09J 7/38*** *(2018.01)*

(52) Cooperative Patent Classification (CPC):
**C08F 2/24; C08F 216/14; C08F 220/18; C08F 283/06; C09J 4/00; C09J 7/38; C09J 133/04**

(86) International application number:
**PCT/JP2021/012035**

(87) International publication number:
**WO 2021/200404 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020063131**

(71) Applicant: **ADEKA CORPORATION**
**Arakawa-ku**
**Tokyo**
**116-8554 (JP)**

(72) Inventors:
- **FUKUDA, Kaori**
  **Tokyo 116-8554 (JP)**
- **TSUKAHARA, Naoki**
  **Tokyo 116-8554 (JP)**
- **AYA, Yoichi**
  **Tokyo 116-8554 (JP)**

(74) Representative: **Müller-Boré & Partner Patentanwälte PartG mbB**
**Friedenheimer Brücke 21**
**80639 München (DE)**

(54) **PRESSURE-SENSITIVE ADHESIVE COMPOSITION AND METHOD FOR PRODUCING SAME, AND REMOVABLE SHEET PROVIDED WITH PRESSURE-SENSITIVE ADHESIVE LAYER**

(57) The present invention provides a pressure-sensitive adhesive composition, including a copolymer obtained by polymerizing (A) at least one of unsaturated compounds represented by the following formula (1) and (B) at least one selected from the group consisting of: an unsaturated carboxylic acid; and an unsaturated carboxylic acid ester compound except for the component (A), a method of producing the pressure-sensitive adhesive composition, and a re-peelable sheet:

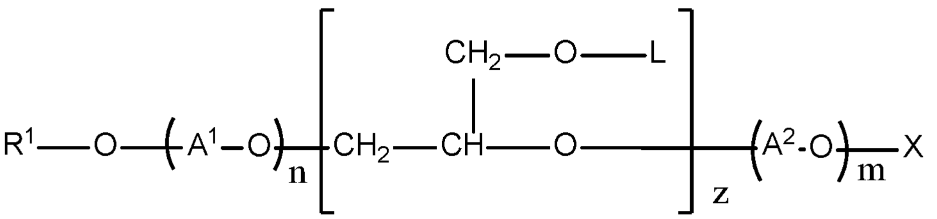

(1)

wherein $R^1$ represents a hydrocarbon group or acyl group having 8 to 36 carbon atoms, $A^1$ and $A^2$ each independently represent an alkylene group having 2 to 4 carbon atoms, L represents a group represented by the following general formula (2), "z" represents a number from 1 to 10, X represents a hydrogen atom or an ionic hydrophilic group, "m" represents a number from 0 to 100, and "n" represents a number from 0 to 100;

EP 4 130 071 A1

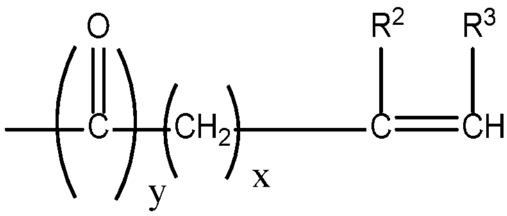

(2)

wherein $R^2$ and $R^3$ each independently represent a hydrogen atom or a methyl group, "x" represents a number from 0 to 12, and "y" represents a number of 0 or 1.

## Description

### Technical Field

The present invention relates to a pressure-sensitive adhesive composition and a method of producing the pressure-sensitive adhesive composition, and a re-peelable sheet including a pressure-sensitive adhesive layer. More specifically, the present invention provides a pressure-sensitive adhesive composition comprising a copolymer obtained by polymerizing two or more of specific monomers containing an unsaturated group, and a re-peelable sheet including a pressure-sensitive adhesive layer comprising the pressure-sensitive adhesive composition.

### Background Art

As a matter of course, pressure-sensitive adhesive sheets including a pressure-sensitive adhesive layer, such as a pressure-sensitive adhesive label, a masking tape or sheet, or a surface protective film, are excellent in pressure-sensitive adhesiveness. However, after the elapse of a certain period of time from bonding of those pressure-sensitive adhesive sheets to adherends, the pressure-sensitive adhesive sheets may be peeled from the adherends. In this case, there often occurs a so-called "adhesive residue" in which part of the pressure-sensitive adhesive layer remains on the surface of the adherend. In addition, when the adherend is paper, the adherend or a base material of the pressure-sensitive adhesive sheet may be torn when the pressure-sensitive adhesive sheet is peeled. In particular, when the adherend is coated paper, such as art paper or cast coated paper, the surface of the coated paper is smooth. Thus, when the pressure-sensitive adhesive sheet is peeled, the pressure-sensitive adhesive layer firmly adheres to the surface of the coated paper, with the result that the surface layer of the coated paper is often broken.

In order to enable the pressure-sensitive adhesive sheet to be easily peeled from the adherend without causing the above-mentioned problems, there have been proposed a large number of re-peelable pressure-sensitive adhesives in each of which a cross-linking agent is added as a pressure-sensitive adhesive for forming a pressure-sensitive adhesive layer so as to increase cohesive force and decrease pressure-sensitive adhesive force. In particular, also in the re-peelable pressure-sensitive adhesives, various investigations have been made because of strong preference for solvent-free aqueous pressure-sensitive adhesives from the viewpoint of environmental hygiene in recent years.

For example, Patent Document 1 discloses an aqueous pressure sensitive adhesive in which a polyglycidyl compound is blended into an aqueous copolymer emulsion having a specific monomer composition, molecular weight, glass transition temperature, and particle diameter.

Patent Document 2 discloses an acrylic emulsion type pressure-sensitive adhesive in which one or more of cross-linking agents selected from a polyfunctional aziridine compound and a polyfunctional carbodiimide compound are added to a specific acrylic emulsion type pressure-sensitive adhesive.

Patent Document 3 discloses a re-peelable pressure sensitive adhesive, which is obtained by blending a specific amount of a water-soluble cross-linking agent containing an oxazoline group into a specific acrylic emulsion type pressure-sensitive adhesive, and which has a solvent-soluble content of 40 mass% or less, an elastic modulus from 2 $kg/cm^2$ to 50 $kg/cm^2$, and a re-peelable force of 500 g/20 mm width or less.

Patent Document 4 discloses a water-dispersed pressure sensitive adhesive for re-peeling, which is obtained by blending a cross-linking agent having a carbodiimide group into a specific acrylic emulsion type pressure-sensitive adhesive so that the ratio (carbodiimide group/carboxyl group) of the carbodiimide group to a carboxyl group contained in the acrylic emulsion type pressure-sensitive adhesive may become from 0.1 to 5.0, and which has a re-peelability of 500 g/20 mm width or less.

Patent Document 5 discloses a pressure-sensitive adhesive comprising a (meth)acrylic acid alkyl ester as a main component, comprising acrylic acid and methacrylic acid as functional monomers, and further comprising a water-soluble cross-linking agent and an oil-soluble cross-linking agent blended therein.

Patent Document 6 proposes a re-peelable pressure-sensitive adhesive sheet using a water-dispersed pressure-sensitive adhesive composition comprising, as essential components, an emulsion of a (meth)acrylic acid ester copolymer, which contains a (meth)acrylic acid alkyl ester unit containing alkyl group having 4 to 12 carbon atoms as a main component and contains unsaturated monomer unit containing 0.1 mass% to 2.0 mass% of a carboxyl group, an emulsion of an alkali-soluble or alkali-swellable (meth)acrylic acid copolymer containing unsaturated monomer unit containing a carboxyl group, and a cross-linking agent.

However, in the re-peelable pressure-sensitive adhesive composition proposed above, when the re-peelable pressure-sensitive adhesive composition is used as a re-peelable sheet including a pressure-sensitive adhesive layer, insufficient pressure-sensitive adhesive force, an adhesive residue at the time of peeling, and the like occur, and hence a re-peelable pressure-sensitive adhesive composition exhibiting satisfactory performance has not been obtained yet.

Meanwhile, Patent Document 7 and the like propose a specific reactive emulsifier for improving the stability of a polymer emulsion by reducing the amount of aggregates at the time of emulsion polymerization.

Citation List

Patent Document

[Patent Document 1] JP H05-75034 A
[Patent Document 2] JP H07-278233 A
[Patent Document 3] JP H10-114887 A
[Patent Document 4] JP 2001-131512 A
[Patent Document 5] JP 2001-152118 A
[Patent Document 6] JP 2009-73920 A
[Patent Document 7] JP 2006-75808 A

Summary of Invention

Technical Problem

Thus, an object of the present invention is to provide a pressure-sensitive adhesive composition, which can be peeled from the surface of an adherend with appropriate peel strength while having sufficient pressure-sensitive adhesion retention force when used as a pressure-sensitive adhesive layer in a re-peelable sheet, and which can reduce the amount of an adhesive residue on the surface of the adherend at the time of peeling, and a method of producing the pressure-sensitive adhesive composition, and to provide a re-peelable sheet.

Solution to Problem

In view of the foregoing, the inventors of the present invention have made extensive investigations, and as a result, have found that a pressure-sensitive adhesive composition comprising a copolymer obtained by polymerizing two or more of specific monomers containing an unsaturated group can achieve the above-mentioned object. Thus, the inventors have arrived at the present invention.

That is, one embodiment of the present invention provides a pressure-sensitive adhesive composition, comprising a copolymer obtained by polymerizing (A) at least one of unsaturated compounds represented by the following formula (1) and (B) at least one selected from the group consisting of: an unsaturated carboxylic acid; and an unsaturated carboxylic acid ester compound except for the component (A):

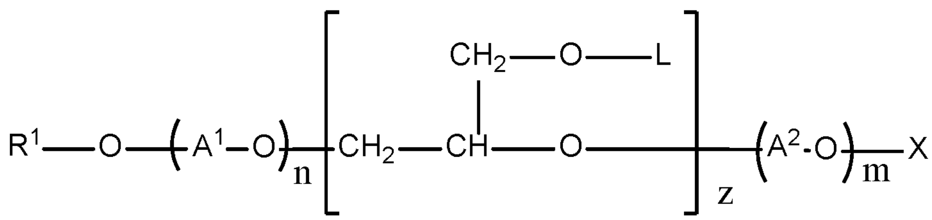
(1)

wherein $R^1$ represents a hydrocarbon group or acyl group having 8 to 36 carbon atoms, $A^1$ and $A^2$ each independently represent an alkylene group having 2 to 4 carbon atoms, L represents a group represented by the following general formula (2), "z" represents a number from 1 to 10, X represents a hydrogen atom or an ionic hydrophilic group, "m" represents a number from 0 to 100, and "n" represents a number from 0 to 100;

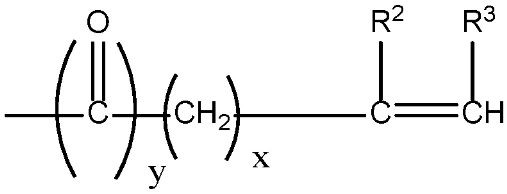
(2)

wherein $R^2$ and $R^3$ each independently represent a hydrogen atom or a methyl group, "x" represents a number from 0 to 12, and "y" represents a number of 0 or 1.

Another embodiment of the present invention provides a re-peelable sheet including a pressure-sensitive adhesive layer comprising the above-mentioned pressure-sensitive adhesive composition.

Advantageous Effects of Invention

The pressure-sensitive adhesive composition provided by the present invention can be peeled from the surface of an adherend with appropriate peel strength while having sufficient pressure-sensitive adhesion retention force when used in a re-peelable sheet, and in particular, can reduce the amount of an adhesive residue on the surface of the adherend. As a result, a re-peelable sheet capable of being suitably used as a pressure-sensitive adhesive label, a masking tape, a surface protective film, or the like can be provided.

Description of Embodiments

A pressure-sensitive adhesive composition of the present invention is described below.

A copolymer contained in the pressure-sensitive adhesive composition of the present invention is obtained by polymerizing (A) at least one of unsaturated compounds represented by the following formula (1) and (B) at least one selected from the group consisting of: an unsaturated carboxylic acid; and an unsaturated carboxylic acid ester compound except for the component (A). The copolymer used in the present invention has a non-uniform repeating unit, and the structure and repetition thereof are diverse. Thus, the structure of the copolymer contained in the pressure-sensitive adhesive composition of the present invention is very complicated. As a result, it is difficult to uniformly represent the structure of the copolymer included in the present invention by a certain general formula. Accordingly, in the present invention, the invention "pressure-sensitive adhesive composition" characterized by comprising such copolymer is defined by the description "comprising a copolymer obtained by polymerizing the component (A) and the component (B)", that is, by a description specifying the copolymer by the production method:

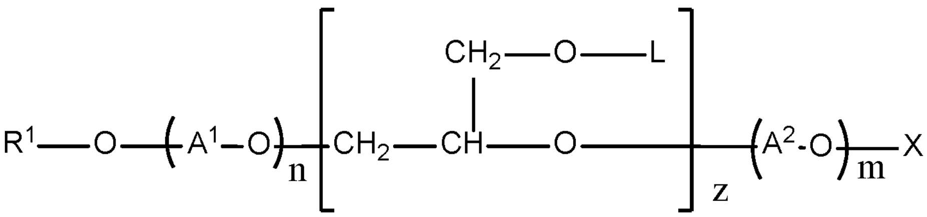
(1)

wherein $R^1$ represents a hydrocarbon group or acyl group having 8 to 36 carbon atoms, $A^1$ and $A^2$ each independently represent an alkylene group having 2 to 4 carbon atoms, L represents a group represented by the following general formula (2), "z" represents a number from 1 to 10, X represents a hydrogen atom or an ionic hydrophilic group, "m" represents a number from 0 to 100, and "n" represents a number from 0 to 100;

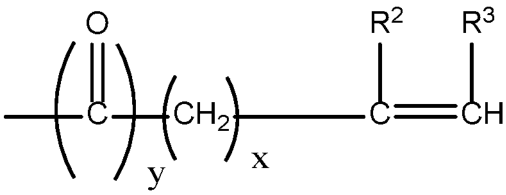
(2)

wherein $R^2$ and $R^3$ each independently represent a hydrogen atom or a methyl group, "x" represents a number from 0 to 12, and "y" represents a number of 0 or 1.

The component (A) for forming the pressure-sensitive adhesive composition of the present invention is represented by the formula (1). In the formula (1), as the hydrocarbon group having 8 to 36 carbon atoms represented by $R^1$, an alkyl group, an alkenyl group, and an aryl group are preferred.

The alkyl group is, for example, a linear or branched alkyl group, and examples thereof include an octyl group, an isooctyl group, a 2-ethylhexyl group, a secondary octyl group, a nonyl group, an isononyl group, a secondary nonyl group, a decyl group, an isodecyl group, a secondary decyl group, an undecyl group, an isoundecyl group, a secondary undecyl group, a dodecyl group, an isododecyl group, a secondary dodecyl group, a tridecyl group, an isotridecyl group, a secondary tridecyl group, a tetradecyl group, an isotetradecyl group, a secondary tetradecyl group, a hexadecyl group, an isohexadecyl group, a secondary hexadecyl group, a stearyl group, an isooctyl group, an eicosyl group, a 2-butyloctyl group, a 2-butyldecyl group, a 2-hexyloctyl group, a 2-hexyldecyl group, a 2-octyldecyl group, a 2-hexyldodecyl group,

a 2-octyldodecyl group, a monomethylisostearyl group, a henicosyl group, a docosyl group, a triacontyl group, and a hexatriacontyl group.

Examples of the alkenyl group include an octenyl group, a nonenyl group, a decenyl group, an undecenyl group, a dodecenyl group, a tetradecenyl group, and an oleyl group.

Examples of the aryl group include a xylyl group, a cumenyl group, a styryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, a dodecylphenyl group, a tridecylphenyl group, and a tetradecylphenyl group.

In addition, as the acyl group having 8 to 36 carbon atoms represented by $R^1$, a branched aliphatic acyl group is preferred. The branched aliphatic acyl group is a residue of a corresponding branched fatty acid. Examples of the branched fatty acid include isooctanoic acid, 2-ethylhexanoic acid, neooctanoic acid, isononanoic acid, 3,4,4-trimethylhexanoic acid, neononanoic acid, isodecanoic acid, 2-propylheptanoic acid, neodecanoic acid, isoundecanoic acid, isododecanoic acid, 2-butyloctanoic acid, isotridecanoic acid, isotetradecanoic acid, isomyristic acid, 2-pentylnonanoic acid, isopentadecanoic acid, isohexadecanoic acid, isopalmitic acid, 2-hexyldecanoic acid, isoheptadecanoic acid, isooctadecanoic acid, isostearic acid, 2-heptylundecanoic acid, isononadecanoic acid, isoeicosanoic acid, 2-octyldodecanoic acid, 2-nonyltridecanoic acid, 2-decyltetradecanoic acid, 2-undecylpentadecanoic acid, 2-dodecylhexadecanoic acid, 2-tridecylheptadecanoic acid, 2-tetradecyloctadecanoic acid, 2-pentadecylnonadecanoic acid, 2-hexadecyleicosanoic acid, and isooleic acid.

It is preferred to incorporate those aliphatic groups having branches because polymerization stability at the time of production of a copolymer and stability of a pressure-sensitive adhesive composition obtained from the copolymer also become excellent.

As the hydrocarbon group, an alkyl group having 8 to 36 carbon atoms is preferred, an alkyl group having 8 to 24 carbon atoms is more preferred, an alkyl group having 10 to 14 carbon atoms is still more preferred, and a branched alkyl group having 11 to 13 carbon atoms is most preferred. It is preferred that unsaturated compounds each satisfying the following condition be present as a mixture as the component (A) : the chain length of the alkyl group represented by $R^1$ be falls within the range of from 8 to 36 carbon atoms.

Examples of the alkylene group having 2 to 4 carbon atoms represented by each of $A^1$ and $A^2$ of the general formula (1) include groups, such as ethylene, propylene, isopropylene, butylene, isobutylene, and second butylene groups, and $(A^1O)_n$ and $(A^2O)_m$ may be identical to or different from each other. Further, in each of $(A^1O)_n$ and $(A^2O)_m$, two or more of alkylene groups may be combined at random or in blocks.
"m" and "n" each independently represent a number from 0 to 100, preferably from 1 to 80, more preferably from 2 to 50, still more preferably from 3 to 20.

When the $A^1O$ and $A^2O$ are each a single group or two or more of groups, it is preferred that an ethylene group be present. When the ratio of the ethylene group to the total molar quantity of the $A^1O$ and $A^2O$ is less than 50 mol%, the stability of a polymer emulsion may be decreased. Thus, the ratio of the ethylene group is preferably from 50 mol% to 100 mol%, more preferably from 60 mol% to 100 mol%, still more preferably from 80 mol% to 100 mol%, most preferably 100 mol%.

In addition, in the general formula (1), L is represented by the following general formula (2).

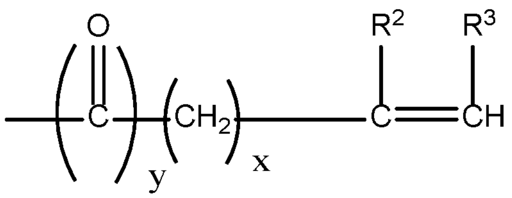

(2)

(In the formula, $R^2$ and $R^3$ each independently represent a hydrogen atom or a methyl group, "x" represents a number from 0 to 12, and "y" represents a number of 0 or 1.)

In the formula, "x" represents preferably a number from 1 to 8, more preferably a number from 1 to 5, still more preferably a number from 1 to 3, most preferably a number of 1.

In addition, it is preferred that "y" represent 0 because when the component in which "y" represents 0 is used, its reactivity is appropriately suppressed and a copolymer can be efficiently obtained.

When the ionic hydrophilic group represented by X in the general formula (1) is an anionic hydrophilic group, the anionic hydrophilic group is preferably $-SO_3M$, $-R^4-SO_3M$, $-R^5-COOM$, $-PO_3M_2$, $-PO_3MH$, or $-CO-R^6-COOM$ (in the formulae, M represents a hydrogen atom, an alkali metal atom, an alkaline earth metal atom, provided that the alkaline earth metal atom is typically divalent, and hence 1/2 mol corresponds to M, or a quaternary ammonium cation, $R^4$ and $R^5$ each represent an alkylene group having 1 to 6 carbon atoms, and $R^6$ represents a divalent hydrocarbon group

having 1 to 12 carbon atoms).

In the formulae representing the anionic hydrophilic group, examples of the alkali metal atom represented by M include lithium, sodium, and potassium atoms, and examples of the alkaline earth metal atom include magnesium and calcium atoms.

In addition, examples of the quaternary ammonium cation include quaternary ammonium cations derived from ammonia, an alkylamine, and an alkanolamine.

In the formulae representing the anionic hydrophilic group, examples of the alkylene group having 1 to 6 carbon atoms represented by $R^4$ or $R^5$ include methylene, ethylene, propylene, butylene, pentene, pentamethylene, and hexamethylene groups.

In the formulae representing the anionic hydrophilic group in the above-mentioned formula, $R^6$ represents a divalent hydrocarbon group having 1 to 12 carbon atoms, preferably a residue obtained by excluding two carboxyl groups from a dibasic acid. Examples of the dibasic acid include: saturated aliphatic dicarboxylic acids, such as malonic acid, succinic acid, glutaric acid, adipic acid, pimelic acid, suberic acid, azelaic acid, sebacic acid, undecanedioic acid, dodecanedioic acid, tridecanedioic acid, and tetradecanedioic acid; saturated alicyclic dicarboxylic acids, such as cyclopentanedicarboxylic acid, hexahydrophthalic acid, and methylhexahydrophthalic acid; aromatic dicarboxylic acids, such as phthalic acid, isophthalic acid, terephthalic acid, tolylenedicarboxylic acid, and xylylenedicarboxylic acid; unsaturated aliphatic dicarboxylic acids, such as maleic acid, fumaric acid, itaconic acid, citraconic acid, and mesaconic acid; and unsaturated alicyclic dicarboxylic acids, such as tetrahydrophthalic acid, methyltetrahydrophthalic acid, nadic acid (endomethylenetetrahydrophthalic acid), methylnadic acid, methylbutenyltetrahydrophthalic acid, and methylpentenyltetrahydrophthalic acid.

Of the above-mentioned anionic hydrophilic groups, a group represented by $-SO_3M$, $-PO_3M_2$, or $-PO_3MH$ is preferred, and $-SO_3M$ is more preferred. In addition, M represents preferably an alkali metal or a quaternary ammonium, more preferably a quaternary ammonium.

In the general formula (1), "z" represents 1 to 10, but depending on the production method of the component (A), the component (A) may be a mixture of compounds different from each other in "z". In the case of the mixture, "z" represents an average value. "z" represents preferably a number from 1 to 8, particularly preferably a number from 1 to 5, most preferably a number from 1 to 3.

The production method of the component (A) of the present invention is not particularly limited. For example, as a method of synthesizing a compound in which X in the general formula (1) corresponds to a hydrogen atom, for example, the compound may be obtained by adding an alkylene oxide or the like to a reaction product of a glycidyl ether having an unsaturated hydrocarbon group and an alcohol or an alcohol alkoxylate by a known method.

Examples of the glycidyl ether having an unsaturated hydrocarbon group to be used for producing the component (A) include allyl glycidyl ether, acrylic glycidyl ether, and methacrylic glycidyl ether. Examples of the alcohol include linear and branched octanols, 2-ethylhexanol, secondary octanol, linear and branched nonyl alcohols, secondary nonyl alcohol, linear and branched decyl alcohols, secondary decyl alcohol, linear and branched undecyl alcohols, secondary undecyl alcohol, linear and branched dodecyl alcohols, secondary dodecyl alcohol, linear and branched tridecyl alcohols, secondary tridecyl alcohol, linear and branched tetradecyl alcohols, secondary tetradecyl alcohol, linear and branched hexadecyl alcohols, secondary hexadecyl alcohol, linear and branched stearyl alcohols, linear and branched eicosyl alcohols, 2-butyloctyl alcohol, 2-butyldecyl alcohol, 2-hexyloctyl alcohol, 2-hexyldecyl alcohol, 2-octyldecyl alcohol, 2-hexyldodecyl alcohol, 2-octyldodecyl alcohol, and monomethyl-branched isostearyl alcohol.

In addition, a catalyst may be used for the ring-opening reaction of a glycidyl ether (epoxy) as required.

The catalyst that may be used is not particularly limited as long as the catalyst is used for the ring-opening reaction of the epoxy, and examples thereof include a tertiary amine, a quaternary ammonium salt, boron trifluoride or an ether complex salt thereof, aluminum chloride, barium oxide, sodium hydroxide, and potassium hydroxide.

In addition, the production method of a compound in which X in the general formula (1) is represented by $-SO_3M$, $-R^4-SO_3M$, $-R^5-COOM$, $-PO_3M_2$, or $-CO-R^6-COOM$ is not limited, but the compound may be produced by causing a compound in which X in the general formula (1) corresponds to a hydrogen atom to react with an ionic hydrophilizer.

The reaction conditions are not particularly limited, but typically, the temperature is from room temperature to 150°C, the pressure is from normal pressure to a pressure of about 0.5 MPa, and the reaction time is from about 1 hour to about 10 hours. As required, a catalyst such as urea may be used.

In addition, when M represents a hydrogen atom, neutralization may be performed with an alkali compound, such as sodium hydroxide or potassium hydroxide, ammonia, an alkylamine, or an alkanolamine, such as monoethanolamine or diethanolamine.

In a case where X is an anionic hydrophilic group represented by $-SO_3M$, examples of the ionic hydrophilizer for introducing an anionic hydrophilic group include sulfamic acid, sulfuric acid, sulfuric anhydride, fuming sulfuric acid, and chlorosulfonic acid.

In a case where X is an anionic hydrophilic group represented by $-R^4-SO_3M$, examples of the ionic hydrophilizer for introducing an anionic hydrophilic group include propane sultone and butane sultone.

In a case where X is an anionic hydrophilic group represented by $-R^5-COOM$, as the ionic hydrophilizer for introducing an anionic hydrophilic group, for example, chloroacetic acid ($R^5$ corresponds to a methylene group), chloropropionic acid ($R^5$ corresponds to an ethylene group), or salts thereof may be used.

In a case where X is an anionic hydrophilic group represented by $-CO-R^6-COOM$, as the ionic hydrophilizer for introducing an anionic hydrophilic group, for example, maleic acid, phthalic acid, or salts thereof may be used.

In a case where X is an anionic hydrophilic group represented by $-PO_3M_2$ or $-PO_3MH$, as the ionic hydrophilizer for introducing an anionic hydrophilic group, for example, phosphorus pentoxide, polyphosphoric acid, orthophosphoric acid, or phosphorus oxychloride may be used. In the case of phosphorylation, a monoester type compound and a diester type compound are obtained as a mixed body. Those compounds may be separated from each other or may be directly used as a mixture thereof when separation is difficult.

When the ionic hydrophilic group represented by X in the general formula (1) is a cationic hydrophilic group, examples of the cationic hydrophilic group include a group represented by $-R^7-NR^8R^9R^{10}\cdot Y$ or $-Z-NR^8R^9R^{10}\cdot Y$. In the formulae each representing a cationic hydrophilic group, Y represents a halogen atom or a methyl sulfate group ($-CH_3SO_4$). Examples of the halogen atom include a chlorine atom, a bromine atom, and an iodine atom. In addition, $R^7$ represents an alkylene group having 1 to 6 carbon atoms. As the alkylene group having 1 to 6 carbon atoms, there may be given, for example, the same alkylene group as that given in $R^4$ of the anionic hydrophilic group.

$R^8$, $R^9$, and $R^{10}$ each independently represent an alkyl group having 1 to 4 carbon atoms, an alkanol group having 2 to 4 carbon atoms, or a benzyl group. Examples of the alkyl group having 1 to 4 carbon atoms include a methyl group, an ethyl group, a propyl group, an isopropyl group, a butyl group, an isobutyl group, a secondary butyl group, and a tertiary butyl group. In addition, examples of the alkanol group having 2 to 4 carbon atoms include a 2-hydroxyethyl group, a 2-hydroxypropyl group, and a 2-hydroxybutyl group. In addition, Z represents a group represented by $-CH_2CH(OH)CH_2-$ or $-CH(CH_2OH)CH_2-$.

When a cationic hydrophilic group in which X isrepresented by $-R^7-NR^8R^9R^{10}\cdot Y$ is introduced, first, a hydroxy group of the compound represented by the general formula (1) in which X represents a hydrogen atom is halogenated with a halogenating agent, such as thionyl chloride, thionyl bromide, or phosgene, and then a tertiary amine compound is reacted with the resultant. Thus, the cationic hydrophilic group can be introduced. Alternatively, after a secondary amine compound instead of the tertiary amine compound is reacted with the resultant, an alkyl halide, dimethyl sulfate, or the like may be reacted with the reaction product. The reaction conditions for halogenating the hydroxy group are not particularly limited, but typically, the temperature is from room temperature to 100°C, the pressure is from normal pressure to a pressure of about 0.5 MPa, and the reaction time is from about 1 hour to about 10 hours. In addition, the reaction conditions for amination are not particularly limited, but typically, the temperature is from room temperature to 150°C, the pressure is from normal pressure to a pressure of about 0.5 MPa, and the reaction time is from about 1 hour to about 10 hours. As required, an alkali, such as sodium hydroxide or potassium hydroxide, may be used as a catalyst.

When a cationic hydrophilic group in which X is represented by $-Z-NR^8R^9R^{10}\cdot Y$ is introduced, first, an epihalohydrin, such as epichlorohydrin or epibromohydrin, is reacted with the compound represented by the general formula (1) in which X is a hydrogen atom, and then a tertiary amine compound is further reacted with the resultant. Thus, the cationic hydrophilic group can be introduced. Alternatively, after a secondary amine compound instead of the tertiary amine compound is reacted with the resultant, an alkyl halide, dimethyl sulfate, or the like may be reacted with the reaction product. The reaction conditions for reacting the epihalohydrin are not particularly limited, but typically, the temperature is from room temperature to 100°C, the pressure is from normal pressure to a pressure of about 0.3 MPa, and the reaction time is from about 1 hour to about 10 hours. As required, an alkali catalyst, such as sodium hydroxide or potassium hydroxide, or an acid catalyst, such as sulfuric acid, phosphoric acid, iron chloride, boron fluoride, or tin chloride, may be used. In addition, the reaction conditions for amination are not particularly limited, but typically, the temperature is set to from room temperature to 150°C, the pressure is set to from normal pressure to a pressure of about 0.5 MPa, and the reaction time is set to from about 1 hour to about 10 hours. As required, an alkali, such as sodium hydroxide or potassium hydroxide, may be used as a catalyst.

The component (B) for forming the pressure-sensitive adhesive composition of the present invention is at least one selected from the group consisting of: an unsaturated carboxylic acid; and an unsaturated carboxylic acid ester compound except for the component (A). Examples of the unsaturated carboxylic acid include: ethylenically unsaturated monocarboxylic acids, such as acrylic acid, methacrylic acid, and crotonic acid; ethylenically unsaturated dicarboxylic acids, such as fumaric acid, itaconic acid, maleic acid, and citraconic acid; and 2-carboxylethyl acrylate and 2-carboxyethyl methacrylate.

In addition, an ester compound of the unsaturated carboxylic acid is a compound having a structure obtained by a reaction between the unsaturated carboxylic acid and an alcohol, and examples of the alcohol include methanol, ethanol, propanol, isopropanol, butanol, isobutanol, sec-butanol, tert-butanol, pentanol, hexanol, heptanol, octanol, 2-ethylhexanol, nonyl alcohol, decyl alcohol, undecyl alcohol, dodecyl alcohol, tridecyl alcohol, tetradecyl alcohol, pentadecyl alcohol, hexadecyl alcohol, heptadecyl alcohol, hexadecyl alcohol, vinyl alcohol, allyl alcohol, and benzyl alcohol.

The unsaturated carboxylic acids or ester compounds thereof may be used alone, but two or more thereof may

also be used in combination to adjust the pressure-sensitive adhesiveness of the pressure-sensitive adhesive composition.

Of those, at least one selected from the group consisting of: acrylic acid; methacrylic acid; and ester compounds thereof is preferably used from the viewpoint of improving the initial pressure-sensitive adhesive force of the pressure-sensitive adhesive composition. Specifically, butyl acrylate, butyl methacrylate, pentyl acrylate, pentyl methacrylate, hexyl acrylate, hexyl methacrylate, heptyl acrylate, heptyl methacrylate, 2-ethylhexyl acrylate, and 2-ethylhexyl methacrylate are preferred, butyl acrylate, butyl methacrylate, 2-ethylhexyl acrylate, and 2-ethylhexyl methacrylate are more preferred, and 2-ethylhexyl acrylate and 2-ethylhexyl methacrylate are still more preferred.

The mixing ratio of the component (A) and the component (B) is not particularly limited to the extent that the effects of the present invention are exhibited, but the mixing ratio of the component (B) is preferably from 10 parts by mass to 200 parts by mass, more preferably from 20 parts by mass to 150 parts by mass, particularly preferably from 30 parts by mass to 100 parts by mass with respect to 1 part by mass of the component (A).

In addition, through use of an unsaturated carboxylic acid ester having two or more unsaturated bonds, which is obtained from a polyhydric alcohol and an unsaturated carboxylic acid as an internal cross-linking agent, the cohesive force of the pressure-sensitive adhesive composition is improved, and a re-peelable sheet can be peeled from the surface of an adherend with appropriate peel strength when the pressure-sensitive adhesive composition is used in the re-peelable sheet.

Examples of the unsaturated carboxylic acid ester having two or more unsaturated bonds include (poly)ethylene glycol di(meth)acrylate, 1,6-hexanediol di(meth)acrylate, trimethylolpropane tri(meth)acrylate, methylenebisacrylamide, and divinylbenzene.

The present invention is a pressure-sensitive adhesive composition comprising a copolymer obtained by polymerizing the component (A) and the component (B), but any other reactive unsaturated compound may be used as a monomer component of the copolymer.

Examples of the other unsaturated compound include styrene, dichlorostyrene, chloromethylstyrene, methylstyrene, acrylamide, acrylonitrile, butadiene, and maleonitrile.

When the other unsaturated compound is used, the amount thereof is preferably from 0 parts by mass to 100 parts by mass, more preferably from 0 parts by mass to 70 parts by mass with respect to 100 parts by mass of the copolymer used in the present invention.

In addition, the glass transition temperature (Tg) of the copolymer of the present invention is preferably 0°C or less, particularly preferably from -20°C to -60°C. When the glass transition temperature (Tg) becomes high, excellent pressure-sensitive adhesive properties cannot be obtained. In addition, when the pressure-sensitive adhesive composition having such glass transition temperature (Tg) is used as a pressure-sensitive adhesive layer in a re-peelable sheet, the property by which the composition penetrates into a sheet base material is decreased, with the result that satisfactory peelability may not be obtained. Meanwhile, when the glass transition temperature is too low, the pressure-sensitive adhesive force of the composition is liable to be decreased.

In the present invention, the glass transition temperature (Tg) of the copolymer is a theoretically calculated value determined by the following FOX equation.

$$1/Tg = W1/Tg1 + W2/Tg2 + \cdots + Wn/Tgn$$

(In the equation, Tg represents a glass transition temperature (K) of the copolymer obtained from the component (A) and component (B) of the present invention, W1, W2,···, Wn each represent a weight fraction of each of the monomers, and Tg1, Tg2,···, Tgn each represent a glass transition temperature of a homopolymer of each of the monomers.)

Values described in references may be used as the glass transition temperatures of the homopolymers to be used in the above-mentioned calculation, and such values are described in, for example, the acrylic ester catalog of Mitsubishi Rayon Co., Ltd. (1997 edition) and "New Polymer Library 7 Introduction to Synthetic Resins for Paints", Kyozo Kitaoka, Polymer Publishing Association, p168-p169.

In a method of producing a copolymer obtained from the component (A) and the component (B), the copolymer may be produced as follows: water, a polymerization initiator, and as required, an emulsifier or the like are added to a mixture of the monomers as described above (hereinafter sometimes referred to as "monomer mixture"), followed by a polymerization reaction. The compound represented by the general formula (1) may also act as an emulsifier, and hence other emulsifiers may not be required.

As the emulsifier that may be used herein, from the viewpoint of improving the stability of the emulsion and making the stability at the time of the production and application of the pressure-sensitive adhesive composition satisfactory, an anionic emulsifier or a nonionic emulsifier is preferred, and an anionic emulsifier is more preferred.

Examples of the anionic emulsifier include sodium lauryl sulfate, ammonium lauryl sulfate, sodium dodecylbenzene sulfonate, a sodium polyoxyethylene alkyl ether sulfate, and a sodium polyoxyethylene alkylphenyl ether sulfate.

Examples of the nonionic emulsifier include a polyoxyethylene alkyl ether and a polyoxyethylene alkylphenyl ether.

In the pressure-sensitive adhesive composition of the present invention, the emulsifier is not essential but is optional since the unsaturated compound represented by the formula (1) used in the present invention acts as an emulsifier. In the case of using the emulsifier, the addition amount thereof is preferably from 0 parts by mass to 12 parts by mass, more preferably from 0 parts by mass to 8 parts by mass, still more preferably from 0 parts by mass to 6 parts by mass with respect to 100 parts by mass of the monomer mixture. Even when the addition amount of the emulsifier is 0 parts by mass, the emulsion polymerization is allowed to proceed stably. Meanwhile, when the emulsifier is used in an amount of more than 12 parts by mass, adverse effects, such as decreases in pressure-sensitive adhesive force and water whitening resistance caused by the residual unreacted emulsifier, and deterioration of peelability, may occur.

The emulsifier may be added directly to a solution in which water is added to the monomer mixture, may be added to a reaction vessel in advance, or the foregoing may be used in combination.

The polymerization initiator that may be used herein is not particularly limited, and may be any of a water-soluble polymerization initiator and an oil-soluble polymerization initiator.

Specific examples of the polymerization initiator include: azo-based compounds, such as 2,2'-azobis(2-methylpropionamidine) dihydrochloride and 2,2'-azobis(2-amidinopropane) dihydrochloride; persulfuric acid salts, such as potassium persulfate, sodium persulfate, and ammonium persulfate; and peroxides, such as benzoyl peroxide, t-butyl hydroperoxide, and hydrogen peroxide. In addition, a redox initiator consisting of a combination of a persulfate and sodium bisulfite, a combination of a peroxide and sodium ascorbate, or the like may be used.

Those polymerization initiators may be used alone or in combination thereof.

Of those, a persulfate or a redox initiator is preferred from the viewpoint of excellent polymerization stability.

The addition amount of the polymerization initiator is preferably from 0.01 part by mass to 6 parts by mass, more preferably from 0.03 part by mass to 4 parts by mass, still more preferably from 0.1 part by mass to 2 parts by mass with respect to 100 parts by mass of the monomer mixture from the viewpoint of accelerating the polymerization rate.

The polymerization initiator may be added to a reaction vessel in advance, may be added immediately before the start of polymerization, or may be added in parts a plurality of times after the start of the polymerization. The polymerization initiator may also be added to the monomer mixture in advance.

At the time of the addition, the polymerization initiator may be separately dissolved in a solvent or the monomer mixture and added, or the dissolved polymerization initiator may be further emulsified and added.

In addition, a chain transfer agent or a pH buffer may be further added at the time of the polymerization.

Examples of the chain transfer agent include decanethiol, laurylmercaptan, glycidylmercaptan, mercaptoacetic acid, 2-mercaptoethanol, thioglycolic acid, 2-ethylhexyl thioglycolate, and 2,3-dimercapto-1-propanol.

The pH buffer is not particularly limited as long as the pH buffer is a compound having a pH buffering action, and examples thereof include sodium hydrogen carbonate, potassium hydrogen carbonate, monosodium phosphate, monopotassium phosphate, disodium phosphate, trisodium phosphate, sodium acetate, ammonium acetate, sodium formate, and ammonium formate.

As water to be used in the polymerization, ion-exchanged water is preferred.

The usage amount of the water is preferably from 30 parts by mass to 400 parts by mass, more preferably from 35 parts by mass to 200 parts by mass, still more preferably from 40 parts by mass to 150 parts by mass with respect to 100 parts by weight of the monomer mixture. When the usage amount of the water is 30 parts by mass or more, the viscosity of the emulsion of a copolymer to be obtained can be set to fall within an appropriate range. In addition, the polymerization stability becomes satisfactory. Meanwhile, when the usage amount is 400 parts by mass or less, the solid content concentration of the emulsion of the copolymer to be obtained can be set to fall within an appropriate range, and the formability of a coating film when the coating film is formed by applying the pressure-sensitive adhesive composition onto a base material for forming a re-peelable sheet becomes satisfactory.

The copolymer for forming the pressure-sensitive adhesive composition of the present invention may be synthesized by allowing the emulsion polymerization of the monomer mixture to proceed through the addition of a polymerization initiator in the presence of an emulsifier as required.

As the procedure for performing the emulsion polymerization, there are given the following methods (1) to (3), and from the viewpoint of easy control of a polymerization temperature, the method (2) or (3) is preferred, and the method (3) is more preferred.

(1) The monomer mixture is placed in a reaction vessel and raised in temperature, and the polymerization initiator dissolved in water or a solvent is added dropwise or dividedly to cause the polymerization.

(2) Part of the monomer mixture is placed in a reaction vessel and raised in temperature, and then the polymerization initiator dissolved in water or a solvent is added dropwise or dividedly to allow the polymerization reaction to proceed. After that, the remaining monomer mixture is added dropwise or dividedly to continue the polymerization.

(3) The polymerization initiator dissolved in water or a solvent is placed in a reaction vessel and raised in temperature,

and then an emulsion or solution consisting of the monomer mixture and water or a solvent is added in a whole amount dropwise or dividedly to cause the polymerization.

The polymerization conditions in the above-mentioned polymerization methods are not particularly limited, but the polymerization is preferably performed under the following conditions.

In the method (1), the temperature range is preferably from 40°C to 100°C, and the polymerization reaction is preferably performed for from about 1 hour to about 8 hours.

In the method (2), it is preferred that 1 mass% to 50 mass% of the monomer mixture be polymerized at from 40°C to 90°C for from 0.1 hour to 4 hours, and then the remaining monomer mixture be added in a whole amount dropwise or dividedly over from about 1 hour to about 5 hours, followed by aging at the same temperature for from about 1 hour to about 3 hours.

In the method (3), it is preferred that the polymerization initiator dissolved in water be raised in temperature to preferably from 40°C to 90°C, and an emulsion consisting of the monomer mixture and water be added in a whole amount dropwise or dividedly over from about 2 hours to about 5 hours. In addition, after that, it is preferred that the resultant be aged at the same temperature for from 1 hour to 5 hours.

In the above-mentioned polymerization methods, from the viewpoint of the polymerization stability, it is preferred that the emulsifier (or part of the emulsifier) be dissolved in the monomer mixture, or the monomer mixture be brought into a state of an O/W type emulsion in advance.

Alkali aqueous solutions, such as aqueous ammonia, various water-soluble amines, a sodium hydroxide aqueous solution, and a potassium hydroxide aqueous solution, may each be further added to the emulsion of the copolymer obtained by each of the above-mentioned polymerization methods to adjust its pH to from 5 to 9, preferably from 6 to 8.5.

In the emulsion of the copolymer, it is preferred to add any one of the above-mentioned alkali aqueous solutions to adjust the pH to within the above-mentioned ranges.

Each of the alkali aqueous solutions may be added in the middle of or after the end of the polymerization, but from the viewpoints of the polymerization stability and the viscosity stability over time of an emulsion to be obtained, it is preferred that part or a whole amount of the alkali aqueous solution be added after being cooled to room temperature in the aging stage during the polymerization.

The solid content concentration in the emulsion or solution of the copolymer obtained from the component (A) and component (B) of the present invention, and the other unsaturated compound is preferably from 10 mass% to 80 mass%, more preferably from 25 mass% to 70 mass%.

The viscosity of the emulsion of the copolymer at 25°C is preferably from 30 mPa·s to 400 mPa·s, more preferably from 50 mPa·s to 300 mPa·s.

The average particle diameter of the emulsion of the copolymer is preferably from 100 nm to 900 nm, more preferably from 200 nm to 600 nm. The average particle diameter as used herein is measured by a dynamic light scattering method.

The pressure-sensitive adhesive composition of the present invention may comprise a cross-linking agent together with the above-mentioned copolymer. The cross-linking agent is a compound that reacts with a carboxyl group that may be present in the copolymer to be cross-linked thereto.

Examples of the cross-linking agent include an epoxy-based compound, an oxazoline-based compound, a carbodiimide-based compound, an aziridine-based compound, a polyisocyanate compound, a melamine-based compound, a metal complex-based compound, an amine-based compound, and hydrazine derivatives, such as adipic acid dihydrazide and sebacic acid dihydrazide.

Those cross-linking agents may be used alone or in combination thereof.

Among the above-mentioned cross-linking agents, at least one selected from the group consisting of: epoxy-based compounds; oxazoline-based compounds; and carbodiimide-based compounds is preferred, and epoxy-based compounds are more preferred, from the viewpoint of improving the adhesiveness between the base material and the pressure-sensitive adhesive layer, the peelability from an adherend, a suppressing effect on an increase in pressure-sensitive adhesive force over time after bonding to the adherend, and the stain resistance, when the pressure-sensitive adhesive composition is used in a re-peelable sheet.

As the epoxy-based compound, a compound having two or more epoxy groups or glycidyl groups in a molecule thereof is preferred.

Examples of the epoxy-based compound include: polyglycidyl ether compounds of mononuclear polyhydric phenol compounds, such as hydroquinone, resorcin, pyrocatechol, and phloroglucinol; polyglycidyl ether compounds of polynuclear polyhydric phenol compounds, such as dihydroxynaphthalene, biphenol, methylenebisphenol (bisphenol F), methylenebis(o-cresol), ethylidenebisphenol, isopropylidenebisphenol (bisphenol A), isopropylidenebis(o-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, o-cresol novolac, ethylphenol novolac, butylphenol novolac, octylphenol novolac, resorcin novolac, and terpene phenol; polyglycidyl ether compounds of polyhydric alcohol compounds, such as ethylene glycol, propylene glycol, butylene glycol, hexanediol, polyethylene glycol, polypropylene glycol, thioglycol, dicyclopentadiene dimethanol, 2,2-bis(4-hydroxycyclohexyl)propane (hydrogenated bisphenol A), glycerin, trimethylolpropane, pentaerythritol, sorbitol, and a bisphenol A-alkylene oxide adduct; glycidyl ester compounds of aliphatic, aromatic, or alicyclic polybasic acids, such as maleic acid, fumaric acid, itaconic acid, succinic acid, glutaric acid, suberic acid, adipic acid, azelaic acid, sebacic acid, a dimer acid, a trimer acid, phthalic acid, isophthalic acid, terephthalic acid, trimellitic acid, trimesic acid, pyromellitic acid, tetrahydrophthalic acid, and endomethylenetetrahydrophthalic acid, and homopolymers or copolymers of glycidyl methacrylate; epoxy compounds each having a glycidylamino group, such as N,N-diglycidylaniline, bis(4-(N-methyl-N-glycidylamino)phenyl)methane, diglycidyl-o-toluidine, N,N-bis(2,3-epoxypropyl)-4-(2,3-epoxypropoxy)-2-methylaniline, N,N-bis(2,3-epoxypropyl)-4-(2,3-epoxypropoxy)aniline, and N,N,N',N'-tetra(2,3-epoxypropyl)-4,4-diaminodiphenylmethane; epoxylated products of cyclic olefin compounds, such as vinylcyclohexene diepoxide, cyclopentanediene diepoxide, 3,4-epoxycyclohexylmethyl-3,4-epoxycyclohexanecarboxylate, 3,4-epoxy-6-methylcyclohexylmethyl-6-methylcyclohexanecarboxylate, and bis(3,4-epoxy-6-methylcyclohexylmethyl)adipate; epoxylated conjugated diene polymers, such as epoxylated polybutadiene and an epoxylated styrene-butadiene copolymerized product; and heterocyclic compounds, such as triglycidyl isocyanurate. In addition, those epoxy resins may be internally cross-linked with an isocyanate-terminated prepolymer or may be increased in molecular weight with a polyvalent active hydrogen compound (polyhydric phenol, polyamine, a carbonyl group-containing compound, polyphosphoric acid ester, etc.).

A commercially available product may also be used as the epoxy compound. Examples of the commercially available product include a bisphenol A-epichlorohydrin type epoxy resin, sorbitol polyglycidyl ether (commercially available products are available under, for example, the product names "DENACOL EX-611", "DENACOL EX-612", "DENACOL EX-614", "DENACOL EX-614B", and "DENACOL EX-622" from Nagase ChemteX Corporation), polyglycerol polyglycidyl ether (commercially available products are available under, for example, the product names "DENACOL EX-512" and "DENACOL EX-521" from Nagase ChemteX Corporation), pentaerythritol polyglycidyl ether (a commercially available product is available under, for example, the product name "DENACOL EX-411" from Nagase ChemteX Corporation), diglycerol polyglycidyl ether (a commercially available product is available under, for example, the product name "DENACOL EX-421" from Nagase ChemteX Corporation), glycerol polyglycidyl ether (commercially available products are available under, for example, the product names "DENACOL EX-313" and "DENACOL EX-314" from Nagase ChemteX Corporation), trimethylolpropane polyglycidyl ether (a commercially available product is available under, for example, the product name "DENACOL EX-321" from Nagase ChemteX Corporation), neopentyl glycol diglycidyl ether (a commercially available product is available under, for example, the product name "DENACOL EX-211" from Nagase ChemteX Corporation), 1,6-hexanediol diglycidyl ether (a commercially available product is available under, for example, the product name "DENACOL EX-212" from Nagase ChemteX Corporation), ethylene glycol diglycidyl ether (commercially available products are available under, for example, the product names "DENACOL EX-810" and "DENACOL EX-811" from Nagase ChemteX Corporation), diethylene glycol diglycidyl ether (commercially available products are available under, for example, the product names "DENACOL EX-850" and "DENACOL EX-851" from Nagase ChemteX Corporation), polyethylene glycol diglycidyl ether (commercially available products are available under, for example, the product names "DENACOL EX-821", "DENACOL EX-830", "DENACOL EX-832", "DENACOL EX-841", and "DENACOL EX-861" from Nagase ChemteX Corporation), propylene glycol diglycidyl ether (a commercially available product is available under, for example, the product name "DENACOL EX-911" from Nagase ChemteX Corporation), polypropylene glycol diglycidyl ether (commercially available products are available under, for example, the product names "DENACOL EX-941", "DENACOL EX-920", and "DENACOL EX-931" from Nagase ChemteX Corporation), diglycidylaniline, N,N,N',N'-tetraglycidyl-m-xylenediamine, and 1,3-bis(N,N'-diglycidylaminomethyl)cyclohexane.

Of those, an aqueous type cross-linking agent is preferred, and glycerol polyglycidyl ether is more preferred.

As the oxazoline-based compound, a compound having two or more oxazoline groups in a molecule thereof is preferred.

An example of such oxazoline-based compound is a copolymer of addition-polymerizable 2-oxazoline (e.g., 2-isopropenyl-2-oxazoline) having a substituent having an unsaturated carbon-carbon bond at a second carbon position and another unsaturated monomer.

Examples of the copolymer include "EPOCROS WS-500", "EPOCROS WS-700", "EPOCROS K-2010E", "EPOCROS K-2020E", and "EPOCROS K-2030E" (each of which is a product name, manufactured by Nippon Shokubai Co., Ltd.).

As the carbodiimide-based compound, a compound having two or more carbodiimide groups in a molecule thereof is preferred.

Examples of such carbodiimide compound include "CARBODILITE V-02", "CARBODILITE V-02-L2", "CARBODILITE V-04", "CARBODILITE V-06", "CARBODILITE E-01", "CARBODILITE E-02", and "CARBODILITE E-04" (each of which is a product name, manufactured by Nisshinbo).

The pressure-sensitive adhesive composition of the present invention may comprise any other additive to the extent that the effects of the present invention are not impaired.

Examples of the other additive include: tackifier resins, such as a (polymerized) rosin-based resin, a (polymerized) rosin ester-based resin, a terpene-based resin, and a terpene phenol-based resin; plasticizers, such as adipic acid diesters, fumaric acid diesters, and sebacic acid diesters; wetting agents, such as a succinic acid dialkyl ester sulfonate, a silicone-based surfactant, a fluorine-based surfactant, and an acetylenediol-based surfactant; a softening agent; a filler; a pigment; a dye; an antioxidant; a thickener; an antifoaming agent; and an antiseptic agent.

The preferred ranges of physical property values of the pressure-sensitive adhesive composition of the present invention are as described below. The following physical property values mean values measured by methods described in Examples.

The gel fraction when the pressure-sensitive adhesive composition of the present invention is applied to a base material, dried, and then dissolved in acetone is from 20 mass% to 90 mass%, preferably from 30 mass% to 70 mass% from the viewpoint of the peel strength of the pressure-sensitive adhesive composition.

The viscosity of the pressure-sensitive adhesive composition of the present invention at 25°C is preferably 500 mPa·s or less, more preferably from 100 mPa·s to 500 mPa·s, still more preferably from 130 mPa·s to 400 mPa·s, yet still more preferably from 160 mPa·s to 350 mPa·s, even yet still more preferably from 180 mPa·s to 320 mPa·s from the viewpoint of supporting high-speed application.

When the viscosity is 500 mPa·s or less, high-speed application can be supported. In addition, when the viscosity is 100 mPa·s or less, the repelling of a coating film may occur.

Next, the re-peelable sheet of the present invention is described.

The re-peelable sheet of the present invention includes, for example, a pressure-sensitive adhesive layer consisting of the above-mentioned pressure-sensitive adhesive composition of the present invention on one surface, or each of both surfaces, of a sheet-like base material.

Herein, the re-peelable sheet is a sheet capable of being peeled after the elapse of a certain period of time from bonding to the surface of an adherend, such as paper, plastic, or a metal, and also encompasses a re-peelable sheet that can be reused itself.

In addition, the re-peelable sheet also encompasses a re-peelable tape, a re-peelable label, and the like.

Herein, although a re-peelable sheet including a pressure-sensitive adhesive layer on one surface of a sheet-like base material is described, the re-peelable sheet may include pressure-sensitive adhesive layers on both surfaces of the sheet-like base material. A case in which the pressure-sensitive adhesive layer itself is used as a re-peelable sheet is also encompassed in the scope of the present invention.

The thickness of the pressure-sensitive adhesive layer of the re-peelable sheet is preferably from 5 μm to 100 μm, more preferably from 10 μm to 60 μm, still more preferably from 15 μm to 40 um. When the thickness of the pressure-sensitive adhesive layer is 5 um or more, sufficient pressure-sensitive adhesive performance can be obtained, and as long as the thickness is 100 um or less, the pressure-sensitive adhesive layer can be prevented from protruding.

The sheet-like base material in the re-peelable sheet is not particularly limited as long as the sheet-like base material is a material to which the pressure-sensitive adhesive layer consisting of the pressure-sensitive adhesive composition of the present invention can firmly adhere. Examples thereof include: resin films of polyester such as polyethylene terephthalate, polybutylene terephthalate, and polyethylene naphthalate, polyimide, polyetherimide, polyaramid, polyetherketone, polyetheretherketone, polyphenylene sulfide, poly(4-methylpentene-1)polyethylene, polyethylene, polypropylene, polybutene, polybutadiene, polymethylpentene, polyvinyl chloride, a vinyl chloride copolymer, polyurethane, an ethylene-vinyl acetate copolymer, an ionomer resin, an ethylene-(meth)acrylic acid copolymer, polystyrene, polycarbonate, a fluororesin, low-density polyethylene, linear low-density polyethylene, and triacetyl cellulose, and laminates and foams thereof; paper base materials, such as synthetic paper produced from polyolefin-based resins, a metal vapor deposition body, high-quality paper, coated paper, and glassine paper and the like; and laminated paper obtained by laminating those paper base materials with a thermoplastic resin such as polyethylene.

The thickness of the sheet-like base material is appropriately selected depending on the kind of a base material to be used, but is preferably from 5 μm to 300 μm, more preferably from 10 μm to 150 μm.

The thickness of the re-peelable sheet is not particularly limited, but is preferably from 5 μm to 300 μm, more preferably from 10 μm to 200 um. When a polyethylene terephthalate-based film is used as the base material for the sheet, the thickness of the re-peelable sheet is preferably from 10 μm to 100 μm.

The re-peelable sheet of the present invention is obtained by applying the pressure-sensitive adhesive composition of the present invention to the surface of the sheet-like base material, followed by drying, to form the pressure-sensitive adhesive layer.

A known method may be used as a method of coating the surface of the sheet-like base material with the pressure-sensitive adhesive composition of the present invention, and examples thereof include a gravure coating method, a bar coating method, a spray coating method, a roll coating method, a die coating method, a knife coating method, an air knife coating method, a lip coating method, and a curtain coating method.

The drying conditions of the formed coating film depend on the drying ability of a coating machine, but it is preferred that the coating film be dried by heating at a temperature of from about 80°C to about 150°C for from about 5

seconds to about 10 minutes. Through this drying step, the pressure-sensitive adhesive layer is formed on the surface of the sheet-like base material.

Examples

The pressure-sensitive adhesive composition and re-peelable sheet of the present invention are specifically described by way of the following Examples, but the present invention is not limited to the following Examples.

[Example 1]

80 g of 2-ethylhexyl acrylate, 116 g of butyl acrylate, and 4 g of acrylic acid were mixed as monomers of the component (B) to prepare a mixed monomer solution.

200 g of the mixed monomer solution, 3.4 g of the following compound (a) serving as a monomer of the component (A), 56 g of ion-exchanged water, and 0.4 g of ammonium persulfate serving as a polymerization initiator were mixed by shaking to prepare a mixed monomer emulsion for dropping (monomer mixture).

Separately, 100.4 g of ion-exchanged water was placed in a reaction vessel equipped with a stirrer, a reflux condenser, a thermometer, a nitrogen introduction tube, and a dropping funnel, and a temperature in the vessel was raised to 80°C. A solution obtained by dissolving 0.4 g of ammonium persulfate as a polymerization initiator in 3.6 g of ion-exchanged water was added to the mixture when the temperature became stable at 80°C. Then, 259.8 g of the mixed monomer emulsion was added dropwise over 3 hours from 15 minutes after the addition of the polymerization initiator to cause polymerization. Further, after the resultant was aged continuously for 1 hour, the mixture was cooled, and its pH was adjusted to from 7 to 8 with aqueous ammonia. Thus, a copolymer emulsion to be used in an evaluation experiment of the present invention was obtained.

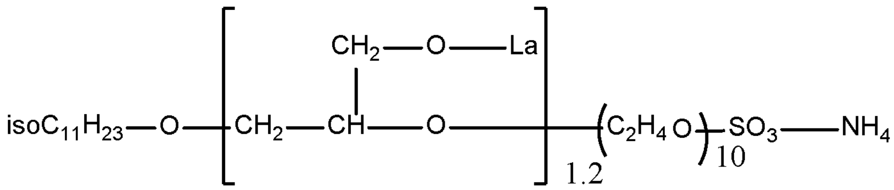

(a)

La :

$$* \text{-}CH_2\text{-}CH{=}CH_2$$

[Examples 2 and 3]

Pressure-sensitive adhesive compositions were each synthesized under the same conditions as those in Example 1 except that decanethiol in an amount (g) shown in Table 1 as a chain transfer agent was added to and mixed with the mixed monomer emulsion and then dropped on the dropping funnel side.

[Example 4]

A pressure-sensitive adhesive composition was synthesized under the same conditions as those in Example 2 in which the chain transfer agent was added except that the following compound (b) was used instead of the compound (a).

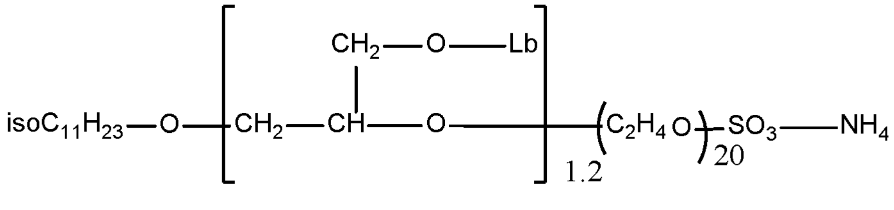

(b)

Lb:

$* \text{-}CH_2\text{-}CH{=}CH_2$

[Example 5]

A pressure-sensitive adhesive composition was synthesized under the same conditions as those in Example 2 in which the chain transfer agent was added except that the following compound (c) was used instead of the compound (a).

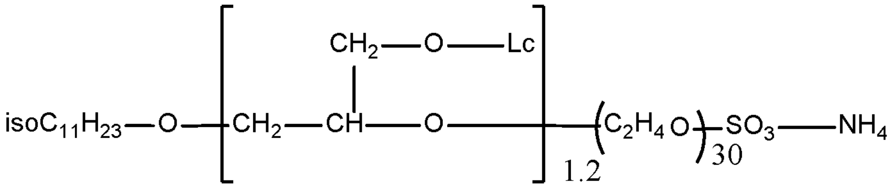

(c)

Lc:

$* \text{-}CH_2\text{-}CH{=}CH_2$

[Comparative Example 1]

A pressure-sensitive adhesive composition was synthesized under the same conditions as those in Example 1 except that the following compound (x) was used instead of the compound (a).

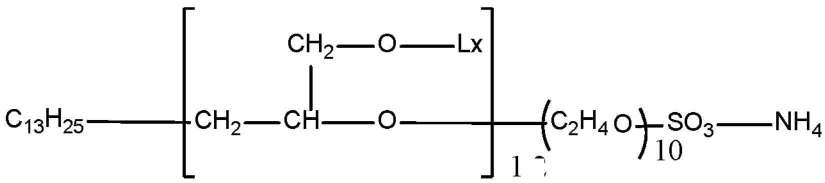

(x)

Lx:

$* \text{-}CH_2\text{-}CH{=}CH_2$

[Comparative Example 2]

A pressure-sensitive adhesive composition was synthesized under the same conditions as those in Example 3 in which the chain transfer agent was added except that the above-mentioned compound (x) was used instead of the compound (a).

[Comparative Example 3]

A pressure-sensitive adhesive composition was synthesized under the same conditions as those in Example 1 except that the following compound (y) was used instead of the compound (a).

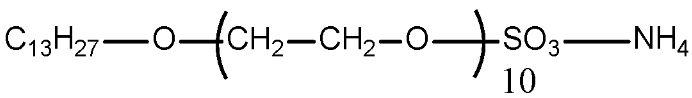

(y)

[Comparative Example 4]

A pressure-sensitive adhesive composition was synthesized under the same conditions as those in Example 3 in which the chain transfer agent was added except that the above-mentioned compound (y) was used instead of the compound (a).

The following evaluations were made through use of the obtained pressure-sensitive adhesive compositions. The results are shown in [Table 1].

[Polymerization Stability]

Aggregates generated during the emulsion polymerization step were filtered from each of the pressure-sensitive adhesive compositions with a 200-mesh filter cloth, and the filtration residue was washed with water and then dried overnight at normal temperature. The mass thereof was represented by mass% with respect to the pressure-sensitive adhesive composition. In this measurement, a case in which the amount of the aggregates is smaller means that the polymerization stability in the emulsion polymerization step is higher, and an amount of less than 0.1 mass% was evaluated to be high polymerization stability.

[Average Particle Diameter]

Part of each of the pressure-sensitive adhesive compositions was taken, and the particle diameter was measured with a dynamic light scattering type zeta potential/particle diameter/molecular weight measurement system (manufactured by Otsuka Electronics Co., Ltd., product name: ELSZ-1000).

[Pressure-Sensitive Adhesion Retention Force Test]

A coating film was formed on the surface of a sheet-like base material consisting of a 38-micrometer thick PET film cut to dimensions of 25 mm×150 mm with a 4 mil applicator, and was dried at 105°C for 3 minutes to form a pressure-sensitive adhesive layer. An adhesive surface of 25 mm×25 mm was bonded to a SUS plate with a 2 kg crimping roller and cured for 24 hours. After that, a load of 1 kg was hung on the resultant, and a time period required for the test piece to fall was measured. The evaluation criteria are as described below.

◦: 48 hours or more
Δ: 24 hours or more and less than 48 hours
×: Less than 24 hours

[Peel Strength Test]

A pressure-sensitive adhesive layer was formed on the surface of a PET film, and an adhesive surface was bonded to a SUS plate with a crimping roller and cured for 24 hours in the same manner as in the pressure-sensitive adhesion retention force test. After that, peel strength at an angle of 180° was measured at a speed of 300 mm/min. The evaluation criteria are as described below, and a peel strength of 5 N or more and less than 10 N was evaluated to be appropriate peel strength.

◦: 5 N or more and less than 10 N
×: 10 N or more or less than 5 N

[Evaluation of Adhesive Residue]

Through use of the SUS plate after the peel strength test, the remaining resin component was colored with a dye and evaluated visually. The evaluation criteria are as described below.

5 points: The ratio of the adhesive remaining after its bonding and peeling is less than 20%.
4 points: The ratio of the adhesive remaining after its bonding and peeling is 20% or more and less than 40%.
3 points: The ratio of the adhesive remaining after its bonding and peeling is 40% or more and less than 60%.
2 points: The ratio of the adhesive remaining after its bonding and peeling is 610 or more and less than 80%.
1 point: The ratio of the adhesive remaining after its bonding and peeling is 80% or more.

[Measurement of Gel Fraction]

A pressure-sensitive adhesive layer was formed on the surface of a PET film in the same manner as in the pressure-sensitive adhesion retention force test. The resultant was immersed in acetone for 24 hours, and a gel fraction was calculated from a change in weight before and after the immersion. The evaluation criteria are as described below, and those with large values were evaluated to be satisfactory.

◦: 30 mass% or more
Δ: 21 mass% to 29 mass%
×: 20 mass% or less

Table 1

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Compound (component (A)) | (a) | (a) | (a) | (b) | (c) | (x) | (x) | (y) | (y) |
| Chain transfer agent (RSH) | 0 | 0.05 | 0.1 | 0.05 | 0.05 | 0 | 0.1 | 0 | 0.1 |
| Particle diameter (nm) | 307 | 305 | 322 | 277 | 359 | 243 | 266 | 285 | 297 |
| Polymerization stability (%) | 0.03 | 0.01 | 0.01 | 0.06 | 0.06 | 0.06 | 0.03 | 0.01 | 0.06 |
| Pressure-sensitive adhesion retention force | ○ | Δ | Δ | ○ | ○ | × | × | × | × |
| Peel strength | ○ | ○ | ○ | ○ | ○ | ○ | ○ | ○ | ○ |
| Adhesive residue | 5 points | 5 points | 4 points | 5 points | 5 points | 3 points | 1 point | 1 point | 1 point |
| Gel fraction | ○ | ○ | ○ | ○ | ○ | ○ | × | × | × |

It was recognized that the re-peelable sheet obtained through use of the pressure-sensitive adhesive composition provided by each of Examples had sufficient pressure-sensitive adhesion retention force, was able to be peeled from an adherend with appropriate peel strength, and was excellent in peelability with a less adhesive residue on the surface of the adherend after peeling.

Meanwhile, it was recognized that, when the pressure-sensitive adhesive composition provided by each of Comparative Examples was used, the pressure-sensitive adhesion retention force was not sufficient, and the peelability was inferior because of the occurrence of an adhesive residue.

Industrial Applicability

The pressure-sensitive adhesive composition of the present invention is excellent in pressure-sensitive adhesive properties to the surface of an adherend and is excellent in peelability, and hence the pressure-sensitive adhesive composition can be suitably used as a pressure-sensitive adhesive for a re-peelable sheet, such as a pressure-sensitive adhesive label or a masking tape.

## Claims

1. A pressure-sensitive adhesive composition, comprising a copolymer obtained by polymerizing (A) at least one of unsaturated compounds represented by the following formula (1) and (B) at least one selected from the group consisting of: an unsaturated carboxylic acid; and an unsaturated carboxylic acid ester compound except for the component (A):

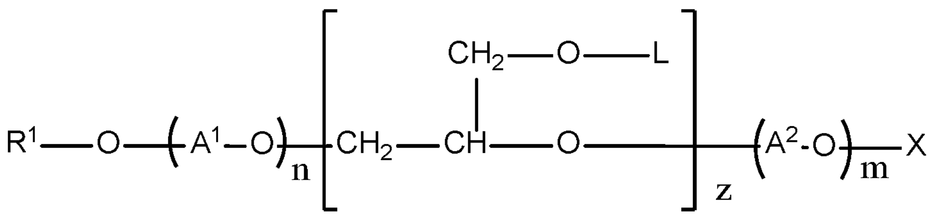
(1)

wherein $R^1$ represents a hydrocarbon group or acyl group having 8 to 36 carbon atoms, $A^1$ and $A^2$ each independently represent an alkylene group having 2 to 4 carbon atoms, L represents a group represented by the following general formula (2), "z" represents a number from 1 to 10, X represents a hydrogen atom or an ionic hydrophilic group, "m" represents a number from 0 to 100, and "n" represents a number from 0 to 100;

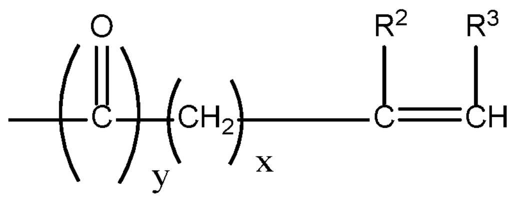
(2)

wherein $R^2$ and $R^3$ each independently represent a hydrogen atom or a methyl group, "x" represents a number from 0 to 12, and "y" represents a number of 0 or 1.

2. The pressure-sensitive adhesive composition according to claim 1, wherein, in the general formula (1), $R^1$ represents a branched aliphatic hydrocarbon group or branched aliphatic acyl group having 8 to 36 carbon atoms.

3. The pressure-sensitive adhesive composition according to claim 1 or 2, wherein, in the general formula (1), X represents an anionic hydrophilic group.

4. The pressure-sensitive adhesive composition according to claim 3, wherein, in the general formula (1), X represents an anionic hydrophilic group represented by $-SO_3M$, $-R^4-SO_3M$, $-R^5-COOM$, $-PO_3M_2$, $-PO_3MH$, or $-CO-R^6-COOM$ wherein M represents a hydrogen atom, an alkali metal atom, an alkaline earth metal atom, provided that the alkaline earth metal atom is typically divalent, and hence 1/2 mol corresponds to M, or a quaternary ammonium cation, $R^4$ and $R^5$ each represent an alkylene group having 1 to 6 carbon atoms, and $R^6$ represents a divalent hydrocarbon

group having 1 to 12 carbon atoms.

5. The pressure-sensitive adhesive composition according to claim 1 or 2, wherein, in the general formula (1), X represents a cationic hydrophilic group.

6. The pressure-sensitive adhesive composition according to claim 5, wherein, in the general formula (1), X represents a cationic hydrophilic group represented by $-R^7-NR^8R^9R^{10} \cdot Y$ or $-Z-NR^8R^9R^{10} \cdot Y$ wherein $R^7$ represents an alkylene group having 1 to 6 carbon atoms, $R^8$ to $R^{10}$ each independently represent an alkyl group having 1 to 4 carbon atoms, an alkanol group having 2 to 4 carbon atoms, or a benzyl group, Y represents a halogen atom or a methyl sulfate group, and Z represents a group represented by $-CH_2CH(OH)CH_2-$ or $-CH(CH_2OH)CH_2-$.

7. The pressure-sensitive adhesive composition according to any one of claims 1 to 6, wherein, in the general formula (1), "z" represents a number from 1 to 5.

8. The pressure-sensitive adhesive composition according to any one of claims 1 to 7, wherein the component (B) is at least one selected from the group consisting of: acrylic acid; methacrylic acid; and ester compounds thereof.

9. A re-peelable sheet, including a pressure-sensitive adhesive layer consisting of the pressure-sensitive adhesive composition of any one of claims 1 to 8.

10. A method of producing a pressure-sensitive adhesive composition, comprising polymerizing (A) at least one of unsaturated compounds represented by the following formula (1) and (B) at least one selected from the group consisting of: an unsaturated carboxylic acid; and an unsaturated carboxylic acid ester compound except for the component (A) to provide a copolymer:

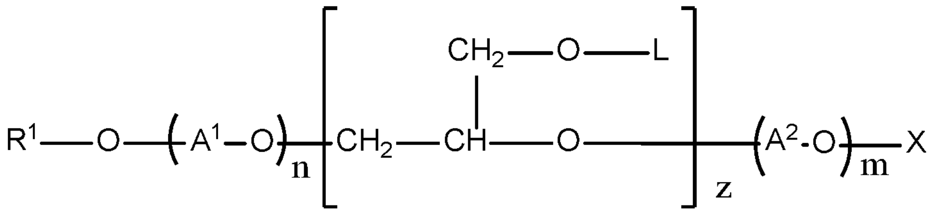

(1)

wherein $R^1$ represents a hydrocarbon group or acyl group having 8 to 36 carbon atoms, $A^1$ and $A^2$ each independently represent an alkylene group having 2 to 4 carbon atoms, L represents a group represented by the following general formula (2), "z" represents a number from 1 to 10, X represents a hydrogen atom or an ionic hydrophilic group, "m" represents a number from 0 to 100, and "n" represents a number from 0 to 100;

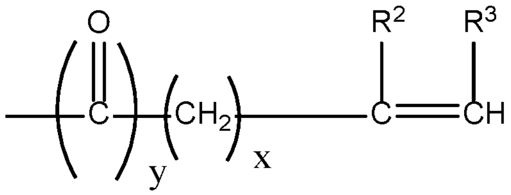

(2)

wherein $R^2$ and $R^3$ each independently represent a hydrogen atom or a methyl group, "x" represents a number from 0 to 12, and "y" represents a number of 0 or 1.

11. A use of a copolymer obtained by polymerizing (A) at least one of unsaturated compounds represented by the following formula (1) and (B) at least one selected from the group consisting of: an unsaturated carboxylic acid; and an unsaturated carboxylic acid ester compound except for the component (A) for producing a pressure-sensitive adhesive composition:

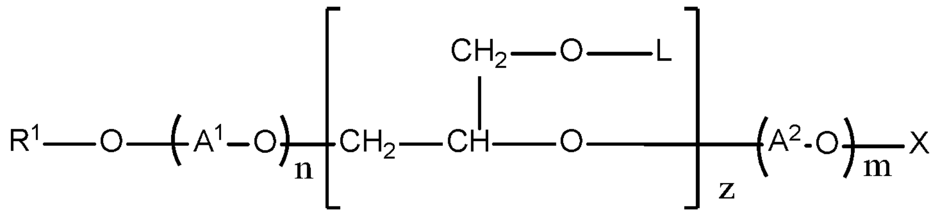

(1)

wherein $R^1$ represents a hydrocarbon group or acyl group having 8 to 36 carbon atoms, $A^1$ and $A^2$ each independently represent an alkylene group having 2 to 4 carbon atoms, L represents a group represented by the following general formula (2), "z" represents a number from 1 to 10, X represents a hydrogen atom or an ionic hydrophilic group, "m" represents a number from 0 to 100, and "n" represents a number from 0 to 100;

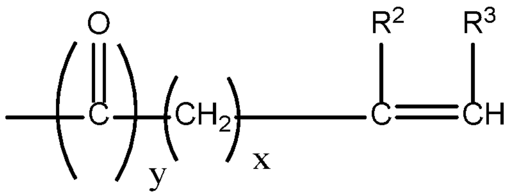

(2)

wherein $R^2$ and $R^3$ each independently represent a hydrogen atom or a methyl group, "x" represents a number from 0 to 12, and "y" represents a number of 0 or 1.

**INTERNATIONAL SEARCH REPORT**

International application No. PCT/JP2021/012035

A. CLASSIFICATION OF SUBJECT MATTER
Int.Cl. C08F283/06(2006.01)i, C09J4/02(2006.01)i, C08F216/14(2006.01)i, C08F220/18(2006.01)i, C09J133/04(2006.01)i, C08F2/24(2006.01)i, C09J7/38(2018.01)i
FI: C09J4/02, C09J7/38, C09J133/04, C08F220/18, C08F216/14, C08F283/06, C08F2/24A
According to International Patent Classification (IPC) or to both national classification and IPC

B. FIELDS SEARCHED
Minimum documentation searched (classification system followed by classification symbols)
Int.Cl. C08F283/06, C09J4/02, C08F216/14, C08F220/18, C09J133/04, C08F2/24, C09J7/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-013981 A (NITTA IND CORP.) 22 January 2015 (2015-01-22), claims, paragraph [0014] | 1-4, 7-11 |
| X | WO 2014/157406 A1 (LINTEC CORPORATION) 02 October 2014 (2014-10-02), claims, paragraphs [0027]-[0040], [0095]-[0109] | 1-4, 7-11 |
| X | JP 2001-040313 A (CHUO RIKA KOGYO CORP.) 13 February 2001 (2001-02-13), claims, paragraphs [0062]-[0092] | 1-4, 7-11 |
| X | JP 07-278233 A (SEKISUI CHEMICAL CO., LTD.) 24 October 1995 (1995-10-24), claims | 1-4, 7-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 May 2021 | Date of mailing of the international search report<br>08 June 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No.
PCT/JP2021/012035

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-301353 A (ASAHI DENKA KOGYO KK) 15 October 2002 (2002-10-15), claims, paragraphs [0003], [0037]-[0039] | 1-11 |
| A | JP 2009-298952 A (SEIKO EPSON CORPORATION) 24 December 2009 (2009-12-24), paragraphs [0061]-[0082] | 1-11 |
| A | JP 2015-224181 A (DAIKIN INDUSTRIES, LTD.) 14 December 2015 (2015-12-14), paragraphs [0025]-[0027] | 1-11 |
| A | JP 2006-075808 A (ASAHI DENKA KOGYO KK) 23 March 2006 (2006-03-23), entire text | 1-11 |

Form PCT/ISA/210 (second sheet) (January 2015)

**INTERNATIONAL SEARCH REPORT**
Information on patent family members

International application No.
PCT/JP2021/012035

| | | |
|---|---|---|
| JP 2015-013981 A | 22 January 2015 | (Family: none) |
| WO 2014/157406 A1 | 02 October 2014 | US 2016/0009960 A1<br>claims, paragraphs [0052]-[0057], [0177]-[0210]<br>EP 2982726 A1<br>claims, paragraphs [0046]-[0051], [0171]-[0201]<br>CN 105073938 A |
| JP 2001-040313 A | 13 February 2001 | (Family: none) |
| JP 07-278233 A | 24 October 1995 | US 5620796 A<br>claims |
| JP 2002-301353 A | 15 October 2002 | US 6841655 B1<br>claims, column 1, lines 20-30, column 8, line 49 to column 9, line 26<br>WO 2002/057320 A1<br>claims, paragraphs [0003], [0037]-[0039]<br>EP 1369434 A1<br>claims, paragraphs [0003], [0043]-[0045]<br>TW 538053 B<br>AT 350404 T<br>CN 1592758 A<br>ES 2276745 T<br>KR 10-0683372 B1 |
| JP 2009-298952 A | 24 December 2009 | (Family: none) |
| JP 2015-224181 A | 14 December 2015 | (Family: none) |
| JP 2006-075808 A | 23 March 2006 | US 2008/0071060 A1<br>entire text<br>WO 2006/030717 A1<br>entire text<br>EP 1825908 A1<br>entire text<br>KR 10-2007-0039056 A<br>CN 1972741 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0575034 A
- JP H07278233 A
- JP H10114887 A
- JP 2001131512 A
- JP 2001152118 A
- JP 2009073920 A
- JP 2006075808 A


### Non-patent literature cited in the description


- **KYOZO KITAOKA.** New Polymer Library 7 Introduction to Synthetic Resins for Paints. Polymer Publishing Association, 168-169